# EUROPEAN PATENT SPECIFICATION

(11) **EP 1 159 361 B1**
(45) Date of publication and mention of the grant of the patent: **02.10.2002**
(21) Application number: 99959047.4
(22) Date of filing: 19.11.1999
(51) Int. Cl.: C09D 201/06, C09D 175/04

(54) **POWDER SLURRY COATING COMPOSITION CONTAINING PARTICULATE CARBAMATE FUNCTIONAL COMPOUNDS AND A LIQUID COMPONENT**
ZUSAMMENSETZUNG ZUR BESCHICHTUNG ENTHALTEND TEILCHENFÖRMIGE CARBAMATEFUNKTIONELLE VERBINDUNGEN UND EINE FLÜSSIGE KOMPONENTE
COMPOSITION DE REVETEMENT CONTENANT DES COMPOSES FONCTIONNELS CARBAMATES PARTICULAIRES ET UNE PHASE LIQUIDE

(30) Priority: 14.12.1998 US 211579
(43) Date of publication of application: 05.12.2001
(73) Proprietor: Basf Corporation, Southfield, MI 48034-2442 (US)
(72) Inventor: SAVINO, Thomas, Northville, MI 48167 (US); OHRBOM, Walter, Hartland Township, MI 48353 (US); MCGEE, John, Avon, IN 46123 (US); REHFUSS, John, Huntersville, NC 28078 (US); GESSNER, Michael, West Bloomfield, MI 48322 (US)
(74) Representative: Fitzner, Uwe, Dr.
(86) International application number: US9927522
(87) International publication number: WO00036036

(56) References cited:
- EP-A- 0 661 315
- GB-A- 1 358 067
- US-A- 5 336 566

## Description

### Field of the Invention

The present invention relates to powder slurry compositions containing particulate, solid carbamate functional compounds. The invention provides a powder slurry composition comprising a particulate component (a) dispersed in a liquid component (b), wherein compound (a) is of the formula R(X)_{y} and has *C*_{*n*} symmetry wherein *n* = 2 or higher and a T_{g} ≥30°C, wherein X is a carbamate functional group and y ≥ 2.

### Background of the Invention

Powder slurry compositions have been used to provide a variety of advantages in the coating of articles. Powder slurry compositions typically include a first component that is in solid particulate form and a second component that is liquid. The first component is dispersed in the second component to provide a slurry which can be applied using conventional spray application equipment and techniques.

Aqueous powder slurry compositions provide the advantages of powder coating compositions with the ease of application of traditional solvent borne coatings. As a result, powder slurry compositions have the potential for environmental and/or financial advantages.

However, powder slurry compositions may present manufacturing, performance and/or application challenges.

Traditional powder slurry compositions often utilize epoxy acid compound systems. Such systems can sacrifice scratch and mar resistance in order to obtain acceptable water resistance, chip resistance and etch resistance.

The nature of the powder coating composition used in the powder slurry composition requires the use of initial temperatures above the T_{g} of the powder resin, followed by temperatures sufficient to affect crosslinking. Thus, high cure schedules are often required. It will be appreciated that application concerns and energy costs encourage the use of powder slurry compositions having lower Tg resins. The use of lower Tg resins facilitates more rapid flow, improved appearance and lower cure temperatures.

However, storage and manufacturing problems can result when powder slurry compositions having lower T_{g} resins are utilized. Manufacturing is particularly challenging, especially with acid epoxy compound systems. Separation, precipitation and/or agglomeration of the solid particulate component during storage may also be observed.

Inferior film adhesion and/or cracking of the applied powder slurry film during curing are sometimes observed, particularly when the powder slurry is applied over a previously applied coating. These negative performance characteristics can be magnified by higher film builds and storage stability.

Finally, finished films obtained from powder slurry compositions can exhibit variable gloss and/or inferior performance characteristics, particularly when balancing scratch and mar resistance against water resistance, chip resistance and etch resistance. It is often difficult to achieve an acceptable balance of properties among these characteristics, especially with traditional acid epoxy powder/powder slurry compound systems.

Thus, it is desirable to provide improved powder slurry compositions wherein the foregoing disadvantages are either eliminated or are minimized. Prior art attempts hereto have been unsuccessful.

It is expected that the use of one or more particulate carbamate functional resins will provide powder slurry compositions having an advantageous balance of properties.

### Summary of the Invention

The invention provides a powder slurry composition having a particulate component (a) dispersed in a liquid component (b). Component (a) comprises a solid or particulate compound (i) of the formula R(X)_{y} and having *C*_{*n*} symmetry wherein *n* = 2 or higher and a T_{g} ≥ 30°C, wherein X is a carbamate functional group and y ≥ 2. One or both of component (a) and component (b) will comprise at least one crosslinking compound (ii).

### Detailed Description of the Invention

The powder slurry composition of the invention requires two components, a first component (a) in solid or particulate form that is dispersed in a liquid component (b).

First component (a) comprises a particulate compound (i) of the formula R(X)_{y}, wherein X is a carbamate functional group, y = 2 or higher. It is necessary for the practice of the invention that compound (a) have *C*_{*n*} symmetry wherein *n* = 2 or higher.

The compound (i) of the invention is particularly suitable for use in powder slurry coating compositions. While not wishing to be bound to a particular theory, the particular advantages of compound (i) are believed to be due in part to the required *C*_{*n*} symmetry wherein *n* is 2 or higher.

The compound (i) of the invention will preferably have a molecular weight of from 350 to 1900 and most preferably from 460 to 900. The equivalent weight per carbamate functional group can range from 175 to 450 and preferably from 175 to 350.

Compound (i) is normally a solid at 25°C, the term "solid" referring to a substance of definite shape and relatively great density, low internal enthalpy, and great cohesion of its molecules. *Grant & Hackh's Chemical Dictionary, Fifth Edition McGraw-Hill, Inc. pg.541.*

In the formula R(X)_{y}, R is a divalent or polyvalent symmetrical linking group, X is a carbamate functional group, and y is 2 or higher. Thus, compound (a) is a carbamate functional compound having at least two carbamate groups. Preferably, compound (a) will have from 2 to 6 carbamate groups, i.e., y is a number from 2 to 6, and most preferably compound (a) will have 2 to 3 carbamate groups, i.e., y is 2 or 3.

R(X)_{y} must have a particular molecular symmetry, i.e., *C*_{*n*} symmetry wherein *n* = 2 or higher. As used herein, a molecule with symmetry means that certain parts of the molecule can be interchanged, via a symmetry operation, with others without altering either the identity or the orientation of the molecule.

Symmetry operations are geometrically defined ways of exchanging equivalent parts of a molecule. However, such operations are symmetry operations if, and only if, the appearance of the molecule is exactly the same relative to the pre- and post- symmetry operation view. Thus, the term "symmetrical" as used herein refers to a molecular having an appearance that appears identical relative to the pre- and post- symmetry operation views. Put another way, "[a] molecule possesses a symemetry element if the application of the operation generated by the element leaves the molecule in an indistinguishable state." *Molecular Symmetry and Group Theory*. Alan Vincent, Wiley & Sons, NY. 1977, reprinted 1981, page 21, hereby incorporated by reference

The instant application is concerned only with proper rotation symmetry operations. Proper rotation, also referred to as "*C*_{*n*}", refers to simple rotation about an axis passing through the molecule by an angle *2π*/*n* or an angle 360°/*n*. A molecule is said to have a *C*_{*n*} symmetry element if after undergoing a proper rotation *C*_{*n*} operation, it's appearance is indistinguishable from it's appearance prior to undergoing the proper rotation *C*_{*n*} operation, irrespective of conformational isomers. Put another way, a molecule possesses a symmetry element, in this case *C*_{*n*}, when one or more of its conformational isomers possesses that symmetry element. The highest symmetry element that belongs to any conformational isomer of the molecule is assigned to the molecule.

For example, the two most common conformational isomers of 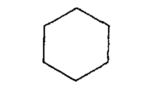 cyclohexane 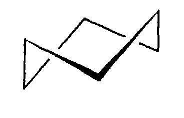 are the chair: 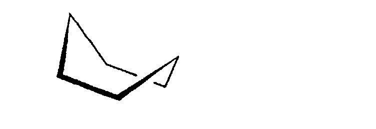 which has a C₃ proper rotation axis, and the boat conformation:
which has a C₂ proper rotation axis. As a result, cyclohexane may be defined as having a molecular C₃ proper rotation axis *(C*_{*n*} wherein *n = 3)* without having to define its conformation.

Similarly, hexane, with the freedom of motion around its numerous single bounds can exist in a large number of configurations such as the one below: 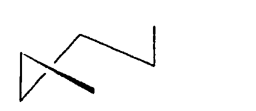 One of the conformational isomers of hexane (shown below) possess a C₂ proper rotation axis. Therefor, hexane may be said to possess a *C*_{*2*} (wherein *n* = 2) molecular symmetry element.

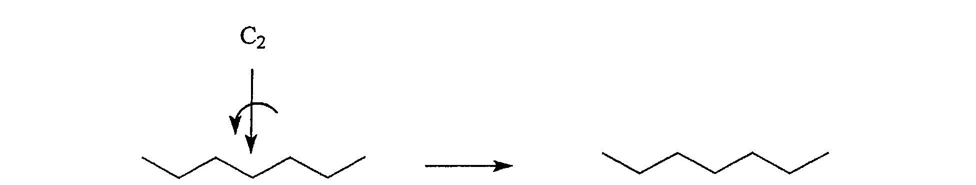

While it may be appreciated that all molecules have *C*_{*n*} symmetry where *n* is 1, the instant application is only concerned with R groups also having *C*_{*n*} symmetry where *n* is 2 or higher.

R may be an alkyl, a cycloalkyl, and/or an aromatic group-containing structure having the required *C*_{*n*} symmetry. R may further comprise additional functional groups so long as the symmetry of R is maintained. For example, R may comprise functional groups comprising single, double, and/or triple bonds with atoms such as C, H, S, O, N and mixtures thereof. Illustrative examples of additional functional groups include ureas, ethers, esters, carbonates, and the like.

In the absence of additional functional groups, examples of illustrative R groups include C₄H₈ and C₆H_{12.} Other illustrative examples of suitable R groups are: 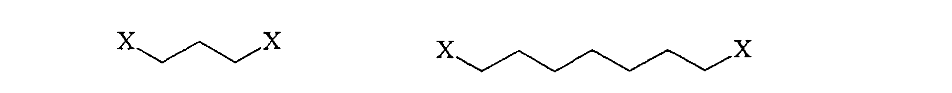 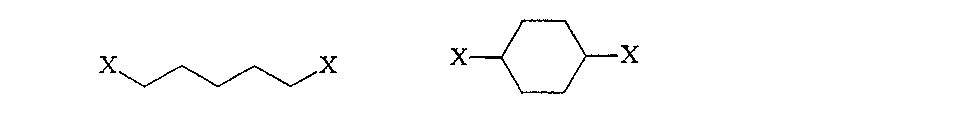 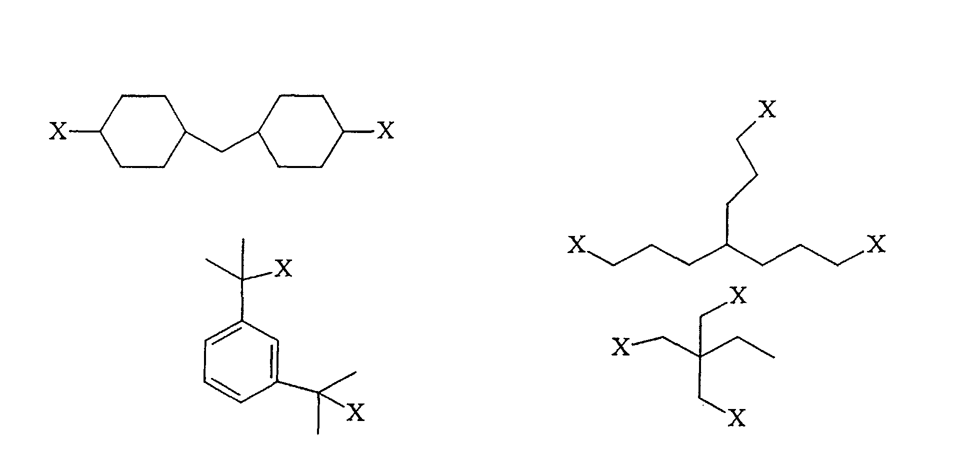 where "X" marks the location of a carbamate group.

Examples of R groups comprising additional functional groups include ureas such as 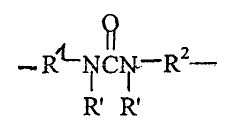 , ethers such as -R¹-O-R²-, and linear carbonates such as 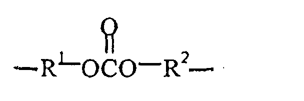 , wherein R¹ and R² are identical and are selected from the group consisting of alkyl or cycloalkyl groups having at least four carbons, and R' and R'' are identical and are H or a C₁-C₄ alkyl. It will be appreciated that in each case, R¹ and R² are linked to carbamate groups X.

R¹ and R² may have, but are not required to have, *C*_{*n*} symmetry, so long as R(X)_{y} has the required *C*_{*n*} symmetry wherein *n* is 2 or higher. Preferably, R¹ and R² will be an alkyl group having from four to 12 carbons and most preferably, will be an alkyl group having from four to eight carbons. Examples of illustrative R¹ and R² groups include C₄H₈ and C₆H₁₂. A particularly preferred group is C₆H₁₂..

Another example of compound (i) is 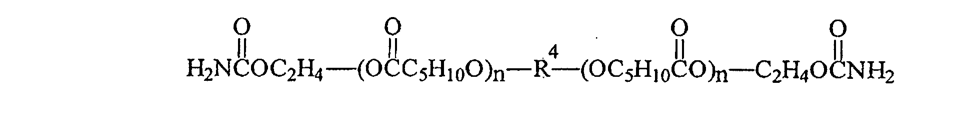 wherein R⁴ may be selected from the group consisting of alkyl, cycloalkyl, and aromatic-group containing structures.

Preferably, R will comprise a C₂-C₁₂ alkyl group or cycloalkyl group. Examples of preferred R groups are hexane, butane, and 1,4 dimethylcyclohexane. Most preferably, R will be butane or hexane.

Carbamate group X may be a primary or secondary carbamate, wherein all X's are identical. When carbamate group X is a secondary carbamate, i.e., 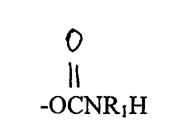 , then R₁ may be a C₁₋₄ alkyl group, with methyl and n-butyl alkyl groups being preferred. Most prefereably, X will be a primary carbamate group.

Compound (i) may be obtained via several methods.

A preferred method of obtaining a compound (a) having the formula R(X)y involves the reaction of a compound R(Y)ₙ with a compound Z, wherein R is as described above, Y is a functional group that can be converted into a carbamate group in one or more steps, n is two or more, and Z is a compound reactive with Y.

This method may be viewed as the transformation of the Y functionality into carbamate functionality in one or more reaction steps. For example, in some reaction schemes such as are described below, the reaction product of R(Y)ₙ + Z may subsequently be reacted with Z' to obtain R(X)_{y}. In other reaction schemes, the reaction product of [[R(Y)ₙ + Z] + Z' ] will be be reacted with Z". Multiple step reactions utilizing Z''' etc., are within the scope of the invention.

Functional groups suitable for use as Y include hydroxyl groups, alkene groups, cyclic carbonate functionality, epoxy groups, isocyanate functionality, aminoplast functionality and halides. Generally, Y will be selected from the group consisting of hydroxyl groups, cylic carbonate functionality, epoxy groups, isocyanate functionality, and halides. Preferred Y groups are hydroxyl, isocyanate, and cylic carbonate functionality. Hydroxyl groups are most preferred for use as Y.

Z may be a compound which can react with compound Y to produce a carbamate group or a group convertible to a carbamate via subsequent reaction steps. Alternatively, compound Z may be a compound having the formula Z^{L}-Q, wherein Z^{L} is a linking group which is reactive with compound Y, and Q is a carbamate group or a group convertible to a carbamate group.

It will be appreciated that the term "group convertible to a carbamate group" refers to those groups such as are discussed below as the precursors to a carbamate group and/or are as discussed in the review article from P. Adams and F. Baron, "Esters of Carbamic Acid", Chemical Review, v 65, 1965.

Examples of Z and/or or Z', Z" and the like, are primary amines, secondary amines, ammonia, phosgene, isocyanates, peroxides, metal salts of hydroxy carbamates, carbon dioxide, hydroxycarbamates, and mixtures thereof.

For example, a compound R(Y)ₙ wherein Y is a cyclic carbonate group (e.g. the reaction product of an epoxy with carbon dioxide) can be converted into a carbamate group by the reaction of a primary or secondary amine or ammonia, i.e., Z. It will be appreciated that this reaction scheme further illustrates how Y can be an epoxy group where Z is carbon dioxide and Z' is the primary or secondary amine or ammonia.

A compound R(Y)ₙ wherein Y is a carbon-carbon double bond, can be converted into an epoxy following known techniques (e.g. reaction with peroxides), then transformed into a carbamate as shown above.

A compound R(Y)ₙ wherein Y is OH can be converted into a carbamate by way of reaction with phosgene followed by reaction with a primary or secondary amine or ammonia. Alternatively, when Y is hydroxy group, R(Y)ₙ can be reacted with a mono-functional isocyanate (Z).

When Y is an isocyanate group, it can be then be reacted with an isocyanate reactable carbamate (e.g., hydroxy ethyl carbamate, hydroxy propyl carbamate, aminoethyl carbamate). In this case, the isocyanate reactable carbamate is of the formula Z^{L}-Q.

When Y is a halide group (e.g. chlorine), R(Y)ₙ can be reacted with a Z which is a metal salt (e.g. sodium, lithium, etc.) of a hydroxy carbamate.

An R with carboxylic acid groups can be converted into an acid anhydride (e.g. reaction with acetic anhydride) to generate an acid anhydride that can then be reacted with a hydroxy carbamate or an amino carbamate

When Y is an aminoplast group (e.g. a carbamate group that has been reacted with an aldehyde or urea), Y can be reacted with a carbamate functional: vinyl, epoxy, cyclic carbonate, hydroxy, or carboxylic acid group, (i.e., Z^{L}-Q, wherein Z^{L} is the carbamate group and Q is the vinyl, epoxy, cyclic carbonate, hydroxy, or carboxylic acid group) and then be converted into a carbamate as described above.

It will be appreciated that the foregoing are illustrative only and that other suitable compounds such as are generally discussed above may be used to obtain a compound (i) of the invention having a formula R(X)_{y}.

The compound (i) of the invention will typically be processed in one or more solid masses, for example sheets, rolls, or drops, by accepted powder compound manufacturing techniques. After solidifying, the mass is broken into particles having a desired size and shape. The size and shape of the compound particles is dependent upon handling, processing, and equipment considerations.

Preferably, the compound (i) will be in the shape of flat chips or discs having regular or irregular dimensions. Particles having an average particle size of from 1 to 3 inches are preferred, with average particle sizes of from 1 micron to up to 1 inch most preferred. Particle size as used herein refers to the average diameter of an object having irregular boundaries that can be determined with known test methods.

It will be appreciated that particulate component (a) is preferably a powder coating comprising compound (i).

Prior to dispersion in liquid component (b), component (a) should have an average particle size of from 0.1 to 100 microns. A preferred average particle size range for component (a) at this time, is from 3 to 60 micron. A 30 to 45 micron average particle size is most preferred. Traditional extrusion and grinding processes may be used to obtain particulate component (a) within these ranges.

Compound (i) may initially have an average particle size within or outside this range resulting from known powder compound manufacturing techniques.

Solid particulate first component (a) upon admixture with liquid component (b) will typically be subsequently treated so as to reduce the above particle sizes to those more desirable for a powder slurry composition. Once in combination with component (b), the powder slurry composition may be subjected to a particle size reduction treatment such as wet milling, microfluidization, cavitation, or other high sheer, low temperature techniques known to those skilled in the art. Thus the particle size of the powder slurry composition of the invention after a particle size reduction treatment is typically from 0.1 to 20 microns, more preferably from 0.1 to 15 microns and most preferably, will have an average particle size of from 0.1 to 12 microns.

Component (a) may be obtained according to conventional techniques and methods. The compositions of the invention are advantageous because compound (i) permits the use of higher processing temperatures. Moreover, during the preparation of solid particulate component (a), or subsequent thereto, pigments, pigment dispersions, modifiers, dispersion aids, regulators, flow modifiers, fillers, and/or additives may optionally be added as desired.

Liquid component (b) may be one or more liquids or solvents suitable for the dispersment of particulate compound (a). Examples of suitable liquids or solvents include water, water soluble solvents, and organic solvents and mixtures thereof. Illustrative water-soluble solvents are alcohols. Examples of illustrative water soluble solvents and/or organic solvents are ethyleneglycol monomethylether, ethyleneglycol monoethylether, ethyleneglycol monobutylether, methanol, ethanol, isopropanol, n-butanol, sec-butanol, tert-butanol, dimethylformamide, etc. Preferred liquids for use in are water, alcohols and mixtures thereof. A most preferred liquid component (b) is water. Such solvents will typically be used in quantities of from 0 to 10, based on total weight of the powder slurry, and preferably from 0 to 1.0%.

The weight proportion of component (a) and component (b) is usually from 90:10 to 50:50, preferably from 75:25 to 60:40, in terms of solid component.

The powder slurry composition of the invention may further comprise additional optional components such as one or more solvents or additives such as pigments, fillers, catalysts, corrosion inhibitors, modifers, dispersants, flow additives, and mixtures thereof. These materials may be incorporated into component (a), component (b) or the mixture thereof.

For the preparation of the powder slurry composition of the invention, the required and optional components may be combined in an optional order and mixed well by conventional processes. Component (b) may be mixed with component (a) and a pigment and, if necessary, further with other optional components. Alternatively, pigment may be mixed with component (b) to form a pigment paste, which is then admixed with a mixture of component (a) and component (b). A grinding or milling operation may follow such admixture. A preferred method of manufacture is disclosed in U.S Patent 5,379,947, hereby incorporated by reference. The powder slurry composition of the invention has advantageously low VOCs as a result of the unexpected benefits of the components of the invention.

The powder slurry composition of the invention can be applied by spray or by electrostatic deposition and are useful as both basecoat and topcoat applications. It is expected that the resultant coating compositions form smooth films with advantageous performance properties.

One or both of component (a) and component (b) will comprise a crosslinking agent (ii) reactive with particulate compound (i).

Crosslinking agent (ii) may be in liquid or solid form at the time of incorporation into component (a), component (b) or the mixture thereof. The use of crosslinking agent (ii) in liquid form and incorporated into liquid component (b) is most preferred.

Illustrative examples of crosslinking agent (ii) include one or more compounds having a plurality of functional groups that are reactive with compound (a). Suitable reactive groups include active methylol or methylalkoxy groups on aminoplast crosslinking agents or on other compounds such as phenol/formaldehyde adducts, acrylamide groups, isocyanate groups, siloxane groups, cyclic carbonate groups, and anhydride groups.

Examples of the at least one crosslinking compound (ii) include melamine formaldehyde compound (including monomeric or polymeric melamine compound and partially or fully alkylated melamine resin), urea resins (e.g., methylol ureas such as urea formaldehyde resin, alkoxy ureas such as butylated urea formaldehyde resin), polymers having acrylamide groups, polymers having methylol or alkoxymethyl groups, polyanhydrides (e.g., polysuccinic anhydride), and polysiloxanes (e.g., trimethoxy siloxane). Monomeric and/or low oligomeric aminoplast resins such as melamine formaldehyde resins or urea formaldehyde resins are especially preferred.

The ratio of equivalents of compound (a) to equivalents of crosslinking agent (ii) is about from 0.5:1.0 (a:b) to 1.5:1.0, preferably from about 0.8:1.0 to 1.2:1.0.

The powder slurry compositions of the invention can be applied by spray or by electrostatic deposition and are useful as both basecoat and topcoat applications. It is expected that the resultant coating compositions form films having an acceptable appearance with advantageous performance properties.

The powder slurry compositions of the invention may be applied to a variety of substrates for use in various end use applications such as automotive, furniture, industrial, lawn and garden, appliances, electrical equipment, and the like.

Suitable substrates include metal, plastic, wood, ceramics, composites and mixtures thereof. Metal and/or plastic substrates are preferred. Substrates will preferably be clean prior to application of the powder coating. Substrates may be optionally pretreated with phosphating, chromatizing and similar pretreatment methods to improve adhesion and/or appearance. It will be appreciated that pretreatment selection is dependent upon the desired substrate and end use application.

After application, the coated part is subjected to a cure schedule sufficient to effect flow and cure. As used herein, "cure schedule" refers to the time/temperature relationship required to effect complete curing of a thermosetting powder coating. Typical cure schedules for the powder coatings of the invention involve part temperatures of from 121 - 204°C (250 to 400°F) and time at part temperature of from 10 to 30 minutes. Preferred cure schedules are from (121°C - 204°C) 250 to 400 °F and time at part temperature of from 10 to 20 minutes.

The inventions are further described in the following nonlimiting examples.

### Example 1

### Preparation of compound (i) according to the invention.

A mixture of 157.7 parts of 1,6-hexanediol, 400 parts of methyl carbamate, and 655.4 parts of toluene were heated to reflux, approximately from 114 to 120°C. 3.6 parts of titanium (IV) isopropoxide was then added and the resulting methanol removed from the system. Upon completion of the reaction, 85 parts of deionized water was added and the dicarbamate isolated by vacuum distillation to provide a solid colorless product.

### Example 2

### Prophetic preparation of a powder slurry composition according to the invention.

Three hundred grams of the compound made in Example 1 is ground in an ACM mill to an average particle size of 25 - 35 microns and set aside. One gram of Abex EP-110¹, is added to 100 grams of Cymel 303² and mixed for 5 minutes with a standard mixing blade. A stainless steel vessel with a cowles mixing blade is loaded with 200 grams of water. Keeping the speed low the following items are added in order: 5 grams of Disperse AYD W-22,³ 0.1 grams of Triton X100⁴, 2.5 grams of propylene glycol, and 3 grams of Acrysol RM-8W⁵. The mixer speed is increased to 4 - 500 rpm for 5 minutes prior to the addition of 132.5 grams of the ground resin. The vessel is allowed to mix for 10 minutes. Next 43 grams of the Cymel 303 premixed above is added followed by 7 grams of Nacure 5225⁶ and 110 grams of water. The vessel is mixed for 10 minutes after which the cowles blade is replaced by a media disk mixing blade. Enough small (1.1 - 1.4 mm) ceramic media is added to the vessel to equal 50% of the volume of the mixture. The temperature of the mixture is maintained at 18 - 23°C, and is stirred at 1200 rpm. The particle size is monitored over time to attain a final median particle size of 4-5 microns. The disk is removed and the media filtered out using a 55 micron nylon filter. The viscosity is adjusted to 35 - 45" #4 Ford cup with water. The slurry is sprayed out of a standard siphon spraygun over a heat flashed but not cured waterborne base coat, allowed to flash 5 minutes at room temperature and then baked for 20 - 30 minutes at 132°C (270°F).
¹ a surfactant, commercially available from Rhodia.
² a hexamethoxymethyl melamine, commercially available from Cytec.
³ a dispersant, commercially available from Daniel Products.
⁴ a nonionic surfactant, commercially available from Union Carbide.
⁵ a thickening agent, commercially available from Rhom & Haas.
⁶ a sulfonic acid catalyst, commercially available from King Industries.

## Claims

1. A powder slurry coating composition comprising
(a) a particulate component comprising
(i) a carbamate functional compound of the formula R(X)_{y} and having *C*_{*n*} symmetry wherein *n* = 2 or higher and a T_{g} ≥ 30°C, wherein X is a carbamate functional group and y ≥ 2,
dispersed in
(b) a liquid component.

2. The powder slurry coating composition of claim 1 wherein R has a molecular weight between 50 and 165.

3. The powder slurry coating composition of claim 1 wherein y is 2 or 3.

4. The powder slurry coating composition of claim 1 wherein *n* is 2.

5. The powder slurry coating composition of claim 1 wherein R is selected from the group consisting of alkyl groups having *C*_{*n*} symmetry wherein *n* is 2 or higher,
cycloalkyl groups having *C*_{*n*} symmetry wherein *n* is 2 or higher, or aromatic containing groups having *C*_{*n*} symmetry wherein *n* is 2 or higher.

6. The powder slurry coating composition of claim I wherein R further comprises functional groups selected from the group consisting of vinyl groups, urea groups, ether groups, ester groups, and carbonate groups.

7. The powder slurry coating composition of claim 1 wherein the compound (i) is selected from the group consisting of 1,6 dicarbamate hexane, 1,4 dicarbamate butane, or 1,4 dicarbamate cyclohexane.

8. The powder slurry coating composition of claim 1 wherein X is a primary carbamate group.

9. The powder slurry coating composition of claim 1 wherein one or both of component (a) and component (b) comprise at least one crosslinking agent (ii) which is reactive with particulate compound (i).

10. The powder slurry coating composition of claim 1 wherein crosslinking agent (ii) is one or more aminoplast resins.

11. The powder slurry coating composition of claim 1 further comprising one or members selected from the group consisting of thickening agents, dispersants, surfactants and mixtures thereof.

## Patentansprüche

1. Pulverslurry-Lackzusammensetzung, enthaltend
(a) eine teilchenförmige Komponente, enthaltend
(i) eine carbamatfunktionelle Verbindung der Formel R(X)_{y} mit C_{*n*}-Symmetrie, worin *n*=2 oder mehr ist, und einer T_{g}≥30°C, wobei X für eine carbamatfunktionelle Gruppe steht und y≥2,
dispergiert in
(b) einer flüssigen Komponente.

2. Pulverslurry-Lackzusammensetzung nach Anspruch 1, bei der R ein Molekulargewicht zwischen 50 und 165 aufweist.

3. Pulverslurry-Lackzusammensetzung nach Anspruch 1, bei der y gleich 2 oder 3 ist.

4. Pulverslurry-Lackzusammensetzung nach Anspruch 1, bei der *n* gleich 2 ist.

5. Pulverslurry-Lackzusammensetzung nach Anspruch 1, bei der R aus der Gruppe bestehend aus Alkylgruppen mit C_{*n*}-Symmetrie, worin *n* gleich 2 oder mehr ist, Cycloalkylgruppen mit C_{*n*}-Symmetrie, bei der n gleich 2 oder mehr ist, oder aromatenhaltigen Gruppen mit C_{*n*}-Symmetrie, worin *n* gleich 2 oder mehr ist, stammt.

6. Pulverslurry-Lackzusammensetzung nach Anspruch 1, bei der R außerdem auch noch funktionelle Gruppen aus der Gruppe bestehend aus Vinylgruppen, Harnstoffgruppen, Ethergruppen, Estergruppen und Carbonatgruppen enthält.

7. pulverslurry-Lackzusammensetzung nach Anspruch 1, bei der die Verbindung (i) aus der Gruppe bestehend aus 1,6-Dicarbamatohexan, 1/4-Dicarbamatobutan oder 1,4-Dicarbamatocyclohexan stammt.

8. Pulverslurry-Lackzusammensetzung nach Anspruch 1, worin X für eine primäre Carbamatgruppe steht.

9. Pulverslurry-Lackzusammensetzung nach Anspruch 1, bei der Komponente (a) und/oder Komponente (b) mindestens einen gegenüber der teilchenförmigen Verbindung (i) reaktiven Vernetzer (ii) enthalten.

10. Pulverslurry-Lackzusammensetzung nach Anspruch 1, bei der es sich bei dem Vernetzer (ii) um ein oder mehrere Aminoplastharze handelt.

11. Pulverslurry-Lackzusammensetzung nach Anspruch 1, ferner enthaltend ein oder mehrere Mitglieder der Gruppe bestehend aus Verdickern, Dispergiermitteln, Tensiden und Gemischen davon.

## Revendications

1. Composition de revêtement en coulis de poudre comprenant
(a) un composant particulaire comprenant
(i) un composé à fonction carbamate de formule R(X)_{y} possédant une symétrie Cₙ, où n = 2 ou plus, et une Tᵥ ≥ 30°C, où X est un groupe fonctionnel carbamate et y ≥ 2,
dispersé dans
(b) un composant liquide.

2. Composition de revêtement en coulis de poudre selon la revendication 1 dans laquelle R possède une masse moléculaire comprise entre 50 et 165.

3. Composition de revêtement en coulis de poudre selon la revendication 1 dans laquelle y vaut 2 ou 3.

4. Composition de revêtement en coulis de poudre selon la revendication 1 dans laquelle n vaut 2.

5. Composition de revêtement en coulis de poudre selon la revendication 1 dans laquelle R est choisi dans le groupe constitué par les groupes alkyle possédant une symétrie Cₙ, où n est égal à 2 ou plus, les groupes cycloalkyle possédant une symétrie Cₙ, où n est égal à 2 ou plus ou les groupes contenant un noyau aromatique possédant une symétrie Cₙ, où n est égal à 2 ou plus.

6. Composition de revêtement en coulis de poudre selon la revendication 1 dans laquelle R comprend par ailleurs des groupes fonctionnels choisis dans le groupe constitué par les groupes vinyle, les groupes urée, les groupes éther, les groupes ester et les groupes carbonate.

7. Composition de revêtement en coulis de poudre selon la revendication 1 dans laquelle le composé (i) est choisi dans le groupe constitué par le 1,6-dicarbamate-hexane, le 1,4-dicarbamate-butane ou le 1,4-dicarbamate-cyclohexane.

8. Composition de revêtement en coulis de poudre selon la revendication 1 dans laquelle X est un groupe carbamate primaire.

9. Composition de revêtement en coulis de poudre selon la revendication 1 dans laquelle un des composants (a) et (b), ou les deux, comprend au moins un agent de réticulation (ii) qui est réactif avec le composé particulaire (i).

10. Composition de revêtement en coulis de poudre selon la revendication 1 dans laquelle l'agent de réticulation (ii) est une ou plusieurs résines aminoplastes.

11. Composition de revêtement en coulis de poudre selon la revendication 1 comprenant en outre un ou des membres du groupe constitué par des agents épaississants, des dispersants, des tensioactifs, et des mélanges de ceux-ci.
